Europäisches Patentamt

European Patent Office

Office européen des brevets

(11) Numéro de publication: **0 065 896**
**B1**

(12) **FASCICULE DE BREVET EUROPEEN**

(45) Date de publication du fascicule du brevet: **12.12.84**

(21) Numéro de dépôt: **82400776.9**

(22) Date de dépôt: **29.04.82**

(51) Int. Cl.³: **F 25 D 3/10, B 29 H 7/14**

(54) **Installation de rigidification transitoire d'un produit en matériau mou.**

(30) Priorité: **08.05.81 FR 8109151**

(43) Date de publication de la demande:
**01.12.82 Bulletin 82/48**

(45) Mention de la délivrance du brevet:
**12.12.84 Bulletin 84/50**

(84) Etats contractants désignés:
**AT BE CH DE FR GB IT LI LU NL SE**

(56) Documents cités:
**DE-A-2 701 120**
**FR-A-2 051 961**
**FR-A-2 290 293**
**FR-A-2 353 386**
**FR-A-2 448 119**
**GB-A-1 329 637**

(73) Titulaire: **L'AIR LIQUIDE, SOCIETE ANONYME POUR L'ETUDE ET L'EXPLOITATION DES PROCEDES GEORGES CLAUDE**
**75, Quai d'Orsay**
**F-75321 Paris Cedex 07 (FR)**

(72) Inventeur: **Contal, François**
**14, bd Edouard Rey**
**F-38000 Grenoble (FR)**
Inventeur: **Boyer, Bernard**
**La Rollandière**
**F-38360 Sassenage (FR)**

(74) Mandataire: **Leclercq, Maurice et al**
**L'AIR LIQUIDE SOCIETE ANONYME POUR L'ETUDE ET L'EXPLOITATION DES PROCEDES GEORGES CLAUDE 75, Quai d'Orsay**
**F-75321 Paris Cedex 07 (FR)**

Courier Press, Leamington Spa, England.

## Description

La présente invention concerne une installation de rigidification transitoire d'un produit en matériau mou de forme très allongée préalablement à son défilement devant un poste de traitement, du type comprenant un tunnel de forme allongée qui comporte un conduit entourant ledit produit avec un jeu radial sur toute la longueur du tunnel, une partie de ce conduit étant pourvue d'un échangeur de chaleur alimenté en azote liquide et débouchant dans ledit conduit.

Le principe général de congélation temporaire de tubes mous destinés à être renforcés est décrit par exemple dans le FR—A—2 290 293.

On a constaté que l'utilisation d'un tunnel à azote liquide, de par sa température très basse (−196°C), se prêtait mieux à ce genre d'opération que les dispositifs de froid mécanique, qui ne garantissent pas l'absence d'humidité à l'endroit du poste de traitement et qui, de ce fait, nécessitent généralement des moyens auxiliaires de séchage.

L'utilisation de l'azote liquide est également plus intéressante que le gaz carbonique, qu'il soit solide ou liquide, dont la température est insuffisante pour obtenir un refroidissement rapide, et dont la manipulation nécessite, dans le cas du gaz carbonique solide, une main d'oeuvre pour sa mise en place dans un bain réfrigéré qui est généralement constitué de méthanol. Si les conditions d'utilisation de l'azote liquide se prêtent remarquablement bien à la technique de rigidification par le froid d'un produit mou en caoutchouc ou en matière plastique, on se heurte très souvent à un prix onéreux qui provient d'une consommation relativement forte avec un rendement thermique extrêmement bas. Ces inconvénients apparaissent par exemple avec l'installation du DE—A—27 01 120, qui est du type précité et où l'azote vaporisé stagne dans la partie médiane du tunnel. De plus, la structure de ce tunnel connu est relativement complexe, car elle comporte deux échangeurs de chaleur, un à chaque extrémité du tunnel.

La présente invention a pour but de fournir une installation offrant à la fois une construction simplifiée et un meilleur rendement thermique.

A cet effet, selon l'invention, dans une installation du type rappelé ci-dessus, l'échangeur de chaleur entoure une partie médiane du conduit, le contour transversal intérieur de la partie amont de ce conduit, depuis son entrée jusqu'en aval de l'échangeur de chaleur, ayant des dimensions supérieures à celles du contour transversal intérieur de la partie aval du conduit. Grâce à cette disposition, l'azote liquide vaporisé dans l'échangeur est injecté dans la zone médiane du conduit, et l'azote gazeux résultant rencontre une résistance à l'écoulement plus grande vers l'aval que vers l'amont. Cet azote gazeux se partage donc de lui-même, dans le rapport des sections libres, entre en débit important vers l'amont et un faible débit vers l'aval. Le premier débit, étant à contre-courant du défilement du produit, en assure un refroidissement très efficace, tandis que le second débit assure la fin du refroidissement, le maintien en froid du produit sortant même en cas d'arrêt de la machine située en aval, et l'inertage de ce produit sortant.

Avantageusement, une sonde thermométrique mesure la température de l'azote vaporisé près d'une zone terminale de la partie de conduit aval et assure la régulation du débit d'azote liquide introduit de façon à maintenir constante ladite température au niveau exact de la température de rigidification. En pratique, l'expérience a montré que la section interstitielle entre le produit et la partie de conduit aval est de préférence comprise entre 65% et 75% de la section interstitielle entre le produit et la partie de conduit amont. De préférence, le débit d'azote s'écoulant à co-courant est de l'ordre de 35% du débit d'azote s'écoulant à contre-courant.

Certes, le FR—A—2 051 961 montre, dans une installation d'un type voisin, un conduit ayant une grande section amont et une petite section aval. Cependant, la grande section sert à permettre l'injection du fluide frigorigène et le recyclage des vapeurs; comme le conduit ne s'étend pas sur toute la longueur du tunnel comme dans les installations du type auquel s'intéresse l'invention, le tunnel étant au contraire obturé à son entrée par un joint souple, la variation de section dudit conduit ne peut avoir pour résultat la division des vapeurs froides en deux flux opposés, contrairement à ce qui se produit dans l'installation conforme à l'invention.

Un exemple de réalisation d'une installation suivant l'invention est décrit aux dessins annexés, dans lesquels;

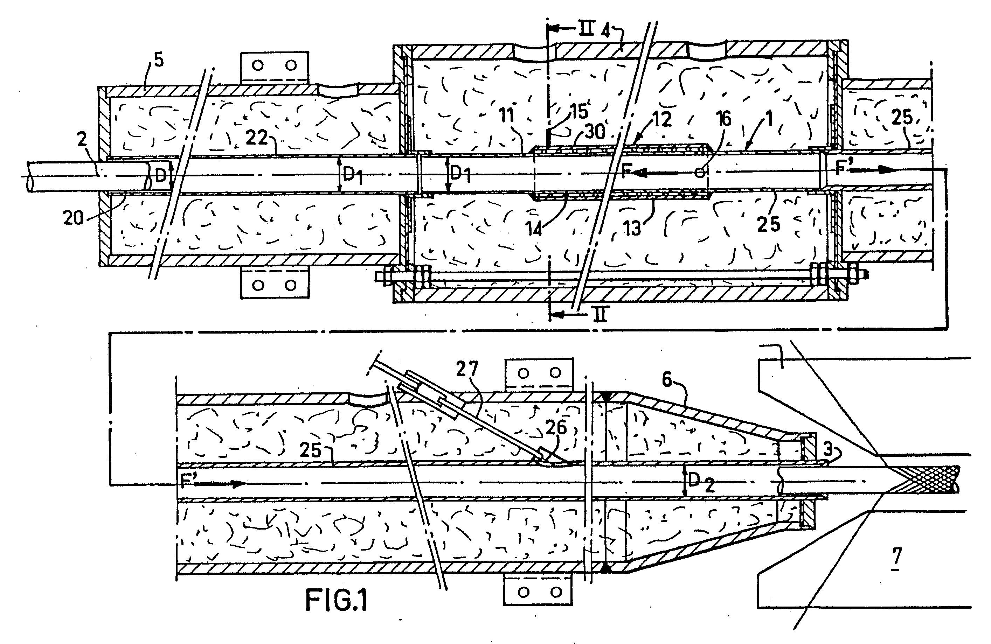

— la figure 1 est une vue en coupe axiale du tunnel de réfrigération de l'installation, et,

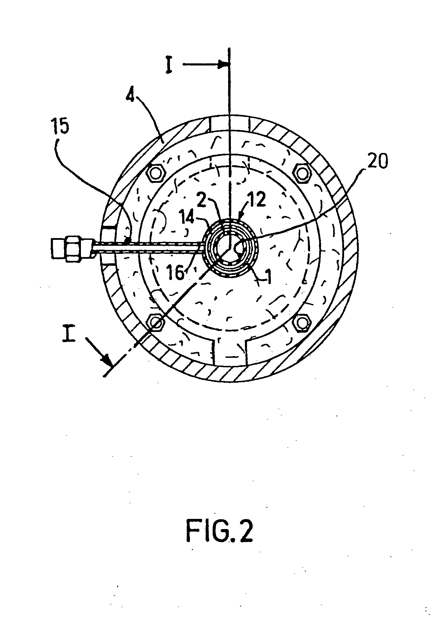

— la figure 2 est une coupe selon la ligne II—II de la figure 1.

En se référant aux dessins annexés, on voit que le tunnel de réfrigération comporte essentiellement un conduit allongé 1 s'étendant depuis une entrée 2 jusqu'à une sortie 3 et ce conduit 1 est enveloppé par des manchons d'isolation thermique 4, 5 et 6, ce dernier ayant une section progressivement réduite vers la sortie 3 de façon à ménager la place pour le dispositif de traitement 7 dont on aura plus loin un exemple d'application. En pratique, le conduit de réfrigération 1 comporte une partie centrale 11 dont une zone centrale 12 est enveloppée à distance par une paroi 13 incorporant une spirale axiale 14 formant ainsi un échangeur thermique raccordé à l'amont par un conduit 15 à une source d'azote liquide et à l'aval débouchant dans plusieurs perforations de conduit 16 à l'intérieur du conduit 1. Dans l'application considérée, il s'agit de réfrigérer un tube de caoutchouc cylindrique 20 et l'ensemble du conduit 1 a une forme cylindrique. La partie centrale 11 du conduit 1 a un diamètre intérieur $D_1$ qui est légèrement supérieur au diamètre extérieur D du tube de caoutchouc, de façon à ménager un espace interstitiel d'écoulement du gaz vaporisé entre le tube de caoutchouc 20 et le conduit 1. A l'amont, à la partie de conduit 11 est raccordée une partie de conduit 22 qui a le même diamètre intérieur $D_1$ que la partie centrale 11 et dont l'extrémité amont forme l'entrée 2. En aval de la partie de conduit 11, le conduit 1 présente une partie de conduit 25 qui a une section également cylindrique, qui est homothétique aux sections des parties de conduit 12 et 22 mais qui a un diamètre $D_2$ de plus faible dimension et, en pourcentage, la section interstitielle de cette partie de conduit aval 25 est comprise entre 65% et 75% de celle des parties de conduit 11 et 22. Près de son extrémité aval, une sonde 27 est placée dans un évidement 26 et cette sonde 27 est raccordée à un dispositif de commande qui assure la commande d'une vanne automatique montée sur la canalisation en azote liquide 15.

En fonctionnement, un tuyau de caoutchouc 20 à température ambiante, c'est-à-dire à l'état relativement mou, est introduit par l'entrée 2 et défile de façon continue à l'intérieur du conduit 1 et devant le poste de traitement 7 qui est par exemple un poste de tressage ou spiralage. On comprend que l'opération de tressage ou spiralage qui consiste à gaîner un tuyau d'une armature d'acier ou de textile nécessite que le tuyau de caoutchouc, qui forme alors mandrin, soit au moins provisoirement rendu rigide. A cet effet, de l'azote liquide introduit dans l'échangeur 30 formé par les parois 12, 13 et le serpentin 14 est introduit à l'intérieur du conduit 1 dans l'espace interstitiel entre le conduit 1 et le tuyau de caoutchouc 20 par les orifices 16 et s'écoule à débit relativement élevé selon la flèche F à contre-courant du tuyau de caoutchouc 20 et à débit pré-déterminé selon la flèche F' à co-courant du tuyau de caoutchouc. La sonde 27 est réglée de façon que le débit d'azote liquide soit juste suffisant pour que le tube de caoutchouc 20 soit à la température de rigidification à la sortie 3 du tunnel 1. Si, pour une raison quelconque, la température du tuyau 20 est supérieure à celle requise, cette anomalie est constatée par la sonde 27 qui provoque immédiatement l'accroissement du débit d'azote liquide, soit par la périodicité d'ouverture d'une vanne, soit par l'ouverture accentuée de vanne. Au contraire, si la température à l'endroit de la sonde 26 est trop basse, une opération de correction inverse se produit.

On notera l'avantage du procédé qui vient d'être décrit où un débit d'azote vaporisé s'écoulant vers l'aval assure différentes fonctions, dont la principale est une fonction de poursuite du refroidissement du produit traité, qui est accru pendant les arrêts de la machine de tressage ou de spiralage, de façon telle que la portion de tuyau immobilisée hors du tunnel avant tressage ou spiralage, est maintenue refroidie pendant tout arrêt de la tresseuse.

Il en résulte une continuité parfaite de la fabrication, malgré les arrêts et une suppression des défauts de fabrication qui auparavant résultaient de chaque arrêt de la machine de tressage ou de spiralage. D'autre part, on assure un inertage de ce produit au niveau du poste de traitement et, surtout, cet azote vaporisé constitué, par son faible débit, un moyen extrêmement sensible à toute variation de température que la sonde peut aisément détecter et ainsi corriger.

Application notamment au tressage ou spiralage d'armature sur tuyau de caoutchouc, ou autres matières élastomères ou plastiques.

**Revendications**

1. Installation de rigidification transitoire d'un produit (20) en matériau mou de forme très allongée préalablement à son défilement devant un poste de traitement, du type comprenant un tunnel de forme allongée qui comporte un conduit (1) entourant ledit produit avec un jeu radial sur toute la longueur du tunnel, une partie (12) de ce conduit étant pourvue d'un échangeur de chaleur (13, 14) alimenté en azote liquide et débouchant dans ledit conduit, caractérisée en ce que l'échangeur de chaleur (13, 14) entoure une partie médiane (12) du conduit (1), le contour transversal intérieur de la partie amont (11, 22) de ce conduit, depuis son entrée (2) jusqu'en aval de l'échangeur de chaleur, ayant des dimensions supérieures à celles du contour transversal intérieur de la partie aval (25) du conduit.

2. Installation selon la revendication 1, caractérisé en ce que la section interstitielle entre le produit (20) et la partie de conduit aval (25) est comprise entre 65 et 75% de la section interstitielle entre ce produit et la partie de conduit amont (11, 22).

3. Installation selon l'une des revendications 1 et 2, caractérisée par une sonde thermométrique (27) placée en une zone voisine de l'extrémité de sortie (3) de la partie de conduit aval (25).

**Patentansprüche**

1. Vorrichtung zur vorübergehenden Versteifung eines Produktes (20) aus einem weichen Material mit langgestreckter Form, bevor es vor eine Behandlungsanlage läuft, mit einem Tunnel von länglicher Form, der eine das Produkt mit Radialspiel über die gesamte Tunnellänge umgebende Röhre (1) besitzt, wobei ein Teil (12) dieser Röhre mit einem Wärmeaustauscher (13, 14) versehen ist, der mit flüssigem Stickstoff gespeist wird und in die Röhre mündet, dadurch gekennzeichnet, daß der Wärmeaustauscher (13, 14) einen Mittelteil (12) der Röhre (1) umgibt, wobei die lichte Weite des Aufstromteils (11, 22) dieser Röhre von ihrem Eintritt (2) bis abstromwärts von dem Wärmeaustauscher größere Abmessungen als jene der lichten Weite des Abstromteils (25) der Röhre hat.

2. Vorrichtung nach Anspruch 1, dadurch gekennzeichnet, daß der Zwischenraum zwischen dem Produkt (20) und dem abstromseitigen Röhrenteil (25) zwischen 65 und 75% des Zwischenraums zwischen dem Produkt und dem aufstromseitigen Röhrenteil (11, 22) ist.

3. Vorrichtung nach einem der Ansprüche 1 und 2, dadurch gekennzeichnet, daß eine Thermometersonde (27) in einer Zone nahe dem Austrittsende (3) des abstromseitigen Röhrenteils (25) angeordnet ist.

**Claims**

1. Device for temporary solidification of an elongated product (20) consisting of a soft material prior to its passing before an apparatus of treatment, comprising a tunnel having an elongated shape comprising a conduit (1) surrounding said product with a radial clearance along the total length of the tunnel, one part (12) of this conduit being provided with a heat exchanger (13, 14) feeded with liquid hydrogen and ending in said conduit, characterized in that the heat exchanger (13, 14) surrounds a middle part (12) of the conduit (1), the inside width of the upstream part (11, 22) of this conduit from its entrance (2) up to downstreamward from the heat exchanger having greater dimensions than those of the inside width of the downstream part (25) of the conduit.

2. Device according to claim 1, characterized in that the intersticial section between the product (20) and the downstream part (25) of the conduit is in between 65 and 75% of the intersticial section between the product and the upstream part (11, 22) of the conduit.

3. Device according to one of the claims 1 and 2, characterized in by a thermometric probe (27) arranged in a zone adjacent to the exit end (30) of the downstream part (25) of the conduit.

FIG.1

FIG.2